# FASCICULE DE BREVET EUROPEEN

(11) **EP 2 794 342 B1**
(45) Date de publication et mention de la délivrance du brevet: **16.03.2016**
(21) Numéro de dépôt: 12813927.6
(22) Date de dépôt: 14.12.2012
(51) Int. Cl.: B60L 11/18, B60L 3/00

(54) **PROCÉDÉ DE CONTRÔLE ET D'OPTIMISATION DE FONCTIONNEMENT D'UNE BORNE DE CHARGEMENT D'UN VÉHICULE ÉLECTRIQUE ET BORNE DE CHARGEMENT POUR LA MISE EN OEUVRE DUDIT PROCÉDÉ**
VERFAHREN ZUR ÜBERWACHUNG UND OPTIMIERUNG DER BETRIEBSWEISE EINES GEBÜHRENTERMINALS FÜR EIN ELEKTROFAHRZEUG UND GEBÜHRENTERMINAL ZUR DURCHFÜHRUNG DES VERFAHRENS
METHOD FOR MONITORING AND OPTIMISING THE OPERATION OF A CHARGING TERMINAL FOR AN ELECTRIC VEHICLE AND CHARGING TERMINAL FOR IMPLEMENTING SAID METHOD

(30) Priorité: 19.12.2011 FR 1103924
(43) Date de publication de la demande: 29.10.2014
(73) Titulaire: Schneider Electric Industries SAS, 92500 Rueil-Malmaison (FR)
(72) Inventeur: DREINA, Emmanuel, 38050 Grenoble Cedex 09 (FR)
(74) Mandataire: Tripodi, Paul
(86) Numéro de dépôt international: PCT/FR2012/052933
(87) Numéro de publication internationale: WO 2013/093306

(56) Documents cités:
- EV CHARGING SYSTEMS COMMITEE: "(R) SAE Electric Vehicle Conductive Charge Coupler J1772", 19961001 , vol. J1772, no. REV. NOV2001 1 octobre 1996 (1996-10-01), pages 1-32, XP002666503, Extrait de l'Internet: URL:http://bzwxw.com/soft/UploadSoft/new5/ SAE--J1772-2001.pdf [extrait le 2012-01-02] cité dans la demande

## Description

### DOMAINE TECHNIQUE DE L'INVENTION

L'invention est relative à un procédé de contrôle et d'optimisation de fonctionnement d'une borne de chargement d'un véhicule électrique, ladite borne comportant des moyens de connexion aptes à se connecter à un véhicule pour un chargement électrique et pour dialoguer au moyen d'un signal transmis sur un fil pilote. Le procédé consiste à :
- générer une tension « de sortie » égale à une première valeur de tension continue ;
- connecter un véhicule électrique à la borne de chargement, la tension « de sortie » passant de la première valeur de tension continue à une seconde valeur de tension continue;
- vérifier l'aptitude au chargement de ladite borne ;
- autoriser la charge du véhicule électrique en modulant la tension « de sortie » entre une valeur positive égale à la seconde valeur de tension et une valeur négative égale à l'opposé de la première valeur de tension, la modulation de type PWM ayant un rapport cyclique fixé en fonction d'un courant de charge maximum autorisé ;
- vérifier l'aptitude du véhicule électrique à être rechargé en contrôlant une valeur positive de la tension « de sortie » modulée, ladite valeur positive de la tension « de sortie » passant de la seconde valeur de tension à une troisième valeur de tension lorsque ledit véhicule est apte ;
- fournir une tension dite « de charge » audit véhicule en modulant la tension « de sortie » entre une valeur positive égale à la troisième valeur de tension et une valeur négative égale à l'opposé de la première valeur de tension, le rapport cyclique de la modulation permettant de fixer le courant de charge maximum à une première valeur.

L'invention est aussi relative à une borne de chargement électrique pour la mise en oeuvre du procédé de contrôle et d'optimisation selon l'invention. Ladite borne comporte des moyens de connexion aptes à se connecter à un véhicule pour un chargement électrique et pour dialoguer au moyen d'un signal transmis sur un fil pilote. La borne comprend aussi des moyens pour générer une tension « de sortie » continue ou modulée et une tension dite « de charge » audit véhicule en modulant la tension « de sortie » entre une valeur positive et une valeur négative, le rapport cyclique de la modulation permettant de fixer le courant de charge maximum à une première valeur. Des moyens de traitement comportent des moyens pour vérifier l'aptitude au chargement de ladite borne, pour vérifier l'aptitude du véhicule électrique à être rechargé en contrôlant une valeur positive de la tension « de sortie » modulée et pour autoriser la charge du véhicule électrique.

### ETAT DE LA TECHNIQUE ANTERIEURE

Les bornes de charges pour véhicule électrique installés sur des parkings collectifs sont de deux types. Un premier type concerne les bornes de charge dites « rapide ». Les tensions appliquées par ce type de borne sont des tensions continues. Les autres types de bornes délivrent des tensions alternatives AC.

Aujourd'hui, les normes existantes ne permettent pas à une borne de charge d'identifier le type de véhicule qui est connecté à celle-ci. En effet, les normes (SAE J1772 et IEC 61851) ne permettent pas à la borne de charge de récupérer des informations sur les caractéristiques du chargeur. La communication entre le véhicule électrique et la borne de charge se limite à une communication sécuritaire. C'est-à-dire que les seules informations échangées permettent notamment de vérifier la continuité de terre entre le véhicule et la borne et/ou de permettre à la borne de fixer le courant maximum consommable par le véhicule et/ou de connaitre l'état dans lequel se trouve le véhicule (connecté, prêt à charger, fin de charge).

Dans le cas d'un parking avec plusieurs bornes de charge, le fait de connaitre le type de véhicule connecté à une borne de charge permettrai d'optimiser la gestion d'énergie au niveau du parking.

En effet, cette connaissance permettrait d'optimiser la gestion de l'énergie au niveau d'un parking sur lequel se trouvent plusieurs bornes de charge. En effet par défaut le gestionnaire d'énergie du parking va réserver 16A ou 32A pour chaque borne. Ceci a un cout : puissance souscrite élevée, incapacité d'alimenter les dernières bornes de charges libre du parking. La connaissance de la puissance maximum consommée par un chargeur en fonction du véhicule électrique en charge permettrait d'utiliser les ampères qui ne seront pas utilisé pour alimenter d'autres bornes de charge.

### EXPOSE DE L'INVENTION

L'invention vise donc à remédier aux inconvénients de l'état de la technique, de manière à proposer un procédé de contrôle et d'optimisation de fonctionnement d'une borne de chargement d'un véhicule électrique, procédé basé sur la connaissance du véhicule connecté à la borne.

Le procédé selon une mode principal de réalisation de l'invention consiste à :
- initialiser une première minuterie de manière concomitante à l'autorisation de la charge du véhicule ;
- relever un premier temps de diagnostic écoulé entre l'initialisation de la première minuterie, et le passage de la tension « de sortie » de la seconde valeur de tension à une troisième valeur de tension ;
- comparer la valeur du premier temps de diagnostic avec des valeurs « étalon » enregistrées dans une base de données ;
- déterminer un type de chargeur du véhicule électrique en fonction d'un état comparatif entre ledit premier temps de diagnostic et les valeurs « étalon » ;
- prendre en compte les caractéristiques du chargeur du véhicule électrique identifié pour optimiser la gestion d'énergie localement.

De préférence, la première valeur de tension continue est supérieure à la seconde valeur de tension continue.

De préférence, la seconde valeur de tension est supérieure à la troisième valeur de tension.

Selon premier mode évolutif de réalisation, le procédé de contrôle consiste à :
- initialiser une seconde minuterie de manière concomitante à la fourniture de la tension dite « de charge » audit véhicule ;
- détecter l'instant où un courant de charge consommé par le véhicule atteint une valeur maximale ;
- relever un second temps de diagnostic écoulé pour que le courant de charge atteigne une valeur maximale ;
- comparer la valeur du second temps de diagnostic avec des valeurs enregistrées dans une base de données en prenant en compte de l'état comparatif relatif à la valeur du premier temps de diagnostic ;
- déterminer un type de chargeur du véhicule électrique en fonction desdits premier et second temps de diagnostic ;
- prendre en compte les caractéristiques du chargeur du véhicule électrique identifié pour optimiser la gestion d'énergie localement.

Selon second mode évolutif de réalisation, le procédé de contrôle consiste à :
- de manière concomitante, initialiser une troisième minuterie et fixer le courant de charge maximum à une seconde valeur de charge, la tension « de sortie » étant modulée entre une valeur positive égale à la troisième valeur de tension et une valeur négative égale à l'opposé de la première valeur de tension ;
- Vérifier que le véhicule régule son courant en fonction de la seconde valeur maximum de charge ;
- relever un troisième temps de diagnostique au moment où véhicule électrique régule son courant de charge à la seconde valeur maximum de charge ;
- comparer la valeur du troisième temps de diagnostique avec des valeurs enregistrées dans une base de données en prenant en compte l'état comparatif la valeur du premier temps de diagnostique et l'état comparatif la valeur du second temps de diagnostique ;
- déterminer un type de chargeur du véhicule électrique en fonction desdits premier, second et troisième temps ;
- prendre en compte les caractéristiques du chargeur du véhicule électrique identifié pour optimiser la gestion d'énergie localement.

De préférence, l'étape de prise en compte consiste à adapter une valeur de consigne de courant maximum de charge en fonction du type de chargeur connecté.

Selon un mode particulier, l'étape de prise en compte consiste à adapter une valeur de consigne du courant maximum de charge en fonction d'un courant maximum consommable par le chargeur connecté identifié.

Avantageusement, l'étape de prise en compte consiste à adapter une puissance électrique maximum délivrée par ladite borne en fonction d'un fonctionnement globale d'une station de charge comportant plusieurs bornes de chargement.

Selon un mode particulier, le procédé de contrôle et d'optimisation consiste à :
- mesurer la différence de courant électrique entre le courant maximum consommable par le chargeur connecté identifié et le courant maximum de charge Iₘₐₓ autorisé par la borne ;
- mettre à disposition la différence de courant électrique mesurée au profit d'une autre borne de chargement de la station de charge.
- pour la mise en oeuvre du procédé de contrôle et d'optimisation selon les revendications précédentes, ladite borne comportant :

Les moyens de traitement de la borne de chargement électrique selon l'invention comportent des moyens pour :
- initialiser une première minuterie de manière concomitante à l'autorisation de la charge du véhicule ;
- relever un premier temps de diagnostic écoulé entre l'initialisation de la première minuterie, et le passage de la tension « de sortie » d'une seconde valeur de tension à une troisième valeur de tension ;
- comparer la valeur du premier temps de diagnostic avec des valeurs « étalon » enregistrées dans une base de données ;
- déterminer un type de chargeur du véhicule électrique en fonction d'un état comparatif entre ledit premier temps de diagnostic et les valeurs « étalon » ;
- prendre en compte les caractéristiques du chargeur du véhicule électrique identifié pour optimiser la gestion d'énergie localement.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
- la figure 1 représente un schéma électrique des circuits de pilotage d'une borne électrique et d'un véhicule électrique, la borne étant connectée au véhicule ;
- la figure 2 représente un chronogramme des différentes phases de contrôle et de charge
- la figure 3 représente un algorithme des étapes d'un procédé de contrôle et d'optimisation de la phase de chargement d'un véhicule électrique selon un mode de réalisation de l'invention ;
- la figure 4 représente un algorithme des étapes du procédé de contrôle et d'optimisation selon un premier mode particulier de réalisation de l'invention selon la figure 3 ;
- la figure 5 représente un algorithme des étapes du procédé de contrôle et d'optimisation selon un second du mode particulier de réalisation selon la figure 4.

### DESCRIPTION DETAILLEE D'UN MODE DE REALISATION

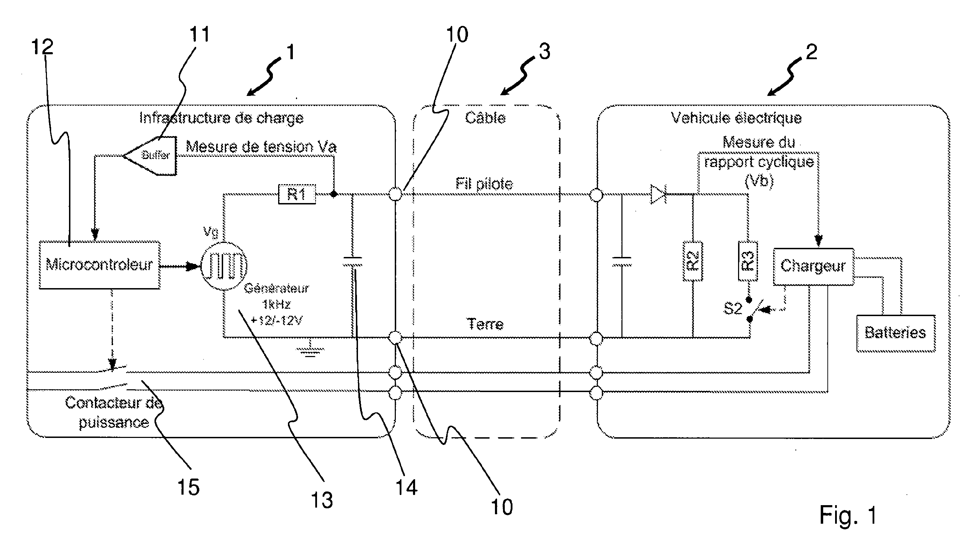

Comme représenté sur la figure 1, ladite borne 1 selon l'invention comporte des moyens de connexion 10 aptes à se connecter à un véhicule 2 pour un chargement électrique. De manière connue, la borne est destinée à être reliée à un véhicule par un câble 3 apte à transmettre l'énergie électrique. Le câble 3 comporte aussi des moyens pour dialoguer au moyen d'un signal transmis sur un fil pilote. La borne 1 comporte en outre une unité de traitement 12 gérée de préférence par un microcontrôleur. La borne de chargement 1 comporte aussi des capacités de filtrage 14 connectées en parallèle des moyens de connexion 10. Des moyens de mesure 11 de la tension au niveau des moyens de connexion sont reliés à l'unité de traitement 12 qui est apte à envoyer des signaux de commande à un générateur de signaux 13.

A titre d'exemple d'application, le générateur de signaux 13 génère une tension « de sortie » au niveau des moyens de connexion 10. La tension « de sortie » peut être une tension continue ou une tension modulée en largeur d'impulsion. La modulation est alors de type PWM. Le rapport cyclique de la modulation de type PWM (Pulse Width Modulation) permet alors de fixer le courant de charge maximum Iₘₐₓ que pourra consommer le véhicule électrique 2. A titre d'exemple, le signal de tension de sortie est modulé à une fréquence de 1KHz et a une amplitude variant en +12V et -12V.

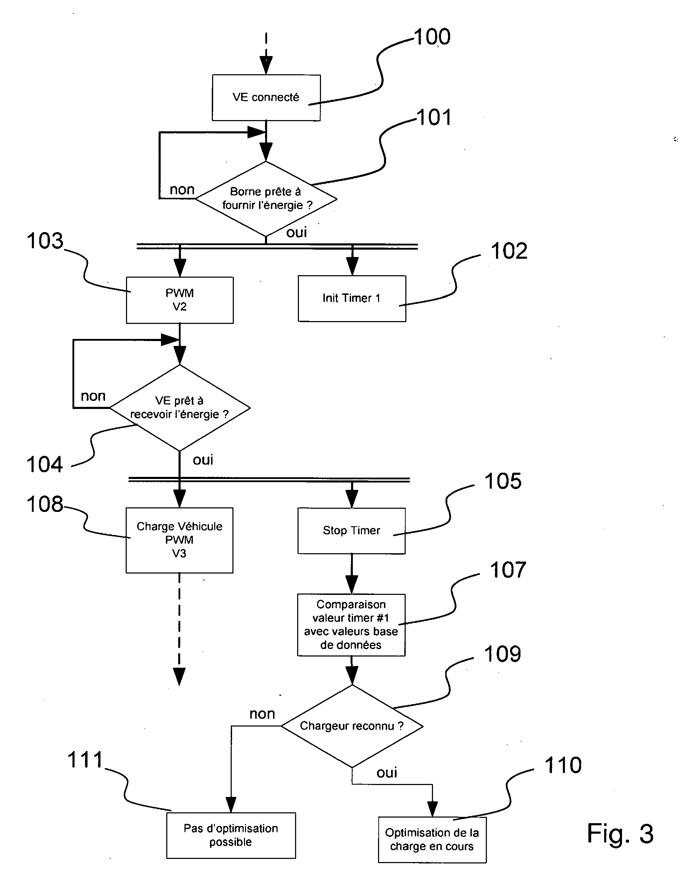

Tel que représenté sur la figure 3, le procédé de contrôle et d'optimisation de fonctionnement d'une borne de chargement 1 selon l'invention, consiste à générer une tension « de sortie » continue égale une première valeur de tension V1. A titre d'exemple d'application la première valeur de tension V1 est égale à 12 Volts.

L'étape suivante du procédé selon l'invention consiste à connecter 100 un véhicule électrique 3 à la borne de chargement 1. La tension « de sortie » continue mesurée par les moyens de mesure 11 de la borne 1 est égale à une seconde valeur de tension V2. Ce passage de la première valeur tension V1 à la seconde valeur de tension V2 est lié à la valeur d'une première résistance R2 de charge du véhicule électrique vue des moyens de connexion 10 de la borne 1. Selon ce mode de réalisation de l'invention, la première valeur de tension V1 est supérieure à la seconde valeur de tension V2. A titre d'exemple, la seconde valeur de tension V2 est égale à 9 volts. Ainsi, ce changement de tension mesuré par la borne informe cette dernière qu'un véhicule est connecté.

L'étape suivante consiste à vérifier 101 l'aptitude au chargement de ladite borne. Le procédé selon l'invention reste à cette étape tant que les conditions requises pour le démarrage de la charge ne sont pas réunies. Ces conditions de démarrage de la charge ne sont par exemple pas remplies lorsqu'il n'y a pas une disponibilité de l'énergie suffisante au niveau de la borne de chargement. En outre, les conditions ne sont pas remplies lorsque par exemple l'usager n'est pas correctement identifié ou encore lorsque le verrouillage de la connexion entre le câble et la borne de chargement n'est pas effectif. De ce fait cette étape est d'une durée indéterminée.

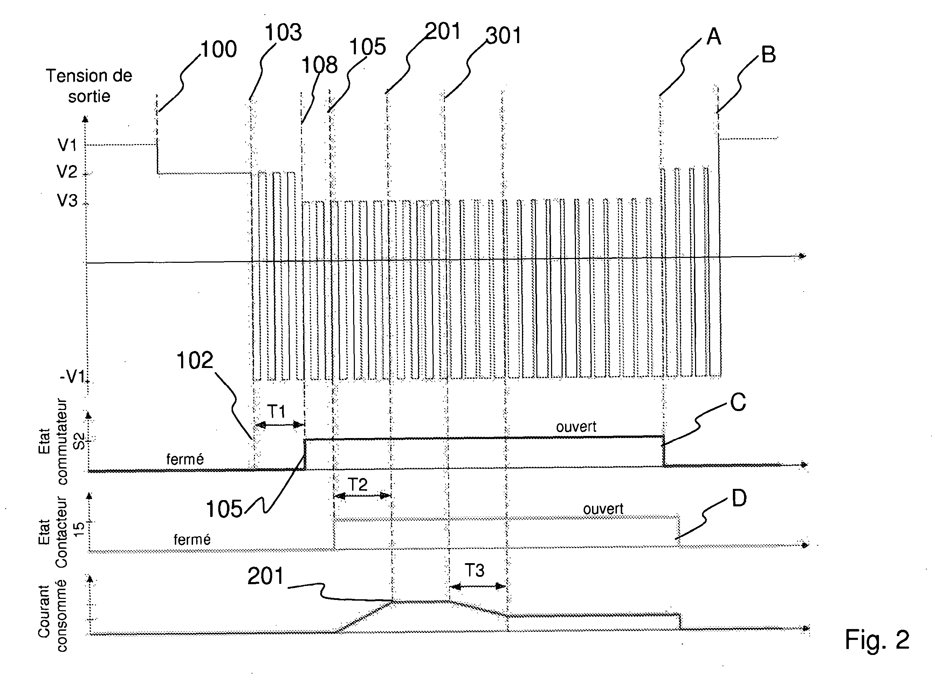

Comme représenté sur les figures 2 et 3, le procédé selon l'invention consiste à autoriser 103 la charge du véhicule électrique en modulant la tension « de sortie » entre une valeur positive égale à la seconde valeur de tension V2 et une valeur négative égale à l'opposé de la première valeur de tension -V1. La modulation de type PWM a alors un rapport cyclique fixé en fonction du courant de charge maximum Iₘₐₓ autorisé par la borne.

L'étape suivante consiste à vérifier 104 l'aptitude du véhicule électrique 2 à être rechargé en contrôlant une valeur positive de la tension « de sortie » modulée. Le véhicule électrique est jugé apte à être rechargé par la borne de chargement 1 si la tension « de sortie » modulée mesurée par les moyens de mesure 11 de la borne est égale à une troisième valeur de tension V3. Autrement dit, ladite valeur positive de la tension « de sortie » passe de la seconde valeur de tension V2 à une troisième valeur de tension V3 lorsque ledit véhicule est apte. Au cours de cette étape, le véhicule électrique analyse alors le signal de tension de sortie modulée et règle son chargeur en fonction du courant maximum autorisé Iₘₐₓ. Le véhicule électrique comporte traditionnellement un circuit de charge connecté aux moyens de connexion 10 de la borne de chargement 1. Une fois le chargeur réglé, le véhicule est prêt à être chargé et le signale à la borne de chargement 1 en changeant sa résistance vue par ladite borne au niveau des moyens de connexion 10. Ce changement de tension sortie de la seconde valeur V2 à la troisième valeur V3 de tension est alors lié à la connexion d'une seconde résistance de charge R3 via la commutation d'un interrupteur S2 dans le circuit de charge du véhicule électrique 2. Tels que représenté sur la figure 1, la seconde résistance de charge R3 est connectée en parallèle à la première résistance de charge R2. Selon ce mode de réalisation de l'invention, la seconde valeur de tension V2 est supérieure à la troisième valeur de tension V2. A titre d'exemple, la troisième valeur de tension V3 est égale à 6 volts.

Lorsque le véhicule est apte à être rechargé, le procédé fourni 108 une tension dite « de charge » audit véhicule par fermeture d'un contacteur de puissance 15 en modulant la tension « de sortie » entre une valeur positive égale à la troisième valeur de tension V3 et une valeur négative égale à l'opposé de la première valeur de tension -V1. Le rapport cyclique de la modulation permettant de fixer une première consigne de courant de charge maximum Iₘₐₓ₁.

En effet, en fonction du modèle et de la marque du véhicule électrique, le chargeur embarqué dans le véhicule a des propriétés différentes. Une des propriétés intéressantes pour la gestion d'énergie est le courant maximum que ce chargeur est capable de consommer sachant que lesdits chargeurs ne consomment pas tous le même courant maximum. A titre exemple, un premier type de chargeur ne consomme pas plus de 13A alors que qu'un second type consomme au maximum 15A. La différence de courant maximum peut être bien plus élevée avec des véhicules électriques plus légers comme des scooters et les prochaines génération de véhicule qui devraient être capable de consommer autour de 32A. Selon un mode préférentiel de réalisation, le procédé selon l'invention est apte à discriminer le type de chargeur connecté à une borne de chargement pour adapter de manière personnalisée le courant maximum de charge autorisé et ainsi optimiser la charge d'autres véhicules électriques connectés à la station de charge.

Selon un mode principal de réalisation de l'invention tel que représenté sur la figure 3, le procédé consiste alors à effectuer concomitamment avec l'étape d'autorisation 103 de la charge du véhicule 103 précédemment décrite, une étape d'initialisation 102 une première minuterie timer #1.

Le procédé consiste ensuite à relever 105 un premier temps de diagnostic T1 écoulé entre l'initialisation 102 de la première minuterie timer #1, et le passage de la tension « de sortie » de la seconde valeur de tension V2 à une troisième valeur de tension V3. La valeur du premier temps de diagnostic T1 est ensuite comparé 107 avec des valeurs « étalon » enregistrées dans une base de données. L'état comparatif entre ledit premier temps de diagnostic T1 et les valeurs « étalon » permet de déterminer 109 un type de chargeur du véhicule électrique 1 connecté à la borne de chargement 1. Connaissant le type de chargeur, l'unité de traitement 12 de la borne de chargement 1 prend 110 en compte les caractéristiques dudit chargeur identifié pour optimiser la gestion d'énergie localement.

Selon un mode particulier de réalisation, l'étape de prise en compte 110 décrite ci-dessus consiste à adapter une valeur de consigne de courant de charge en fonction du type de chargeur connecté. Selon une variante, ladite étape de prise en compte 110 consiste à adapter une puissance électrique délivrée par ladite borne en fonction d'un fonctionnement globale d'une station de charge comportant plusieurs bornes. En effet, la puissance mise à disposition par la station de charge est très souvent inférieure à la somme des puissances des bornes de cette station. Ainsi, afin d'optimiser le service de charge il est nécessaire d'ajuster la puissance maximum autorisée à charge véhicule électrique en fonction des caractéristiques des chargeurs respectifs desdits véhicules.

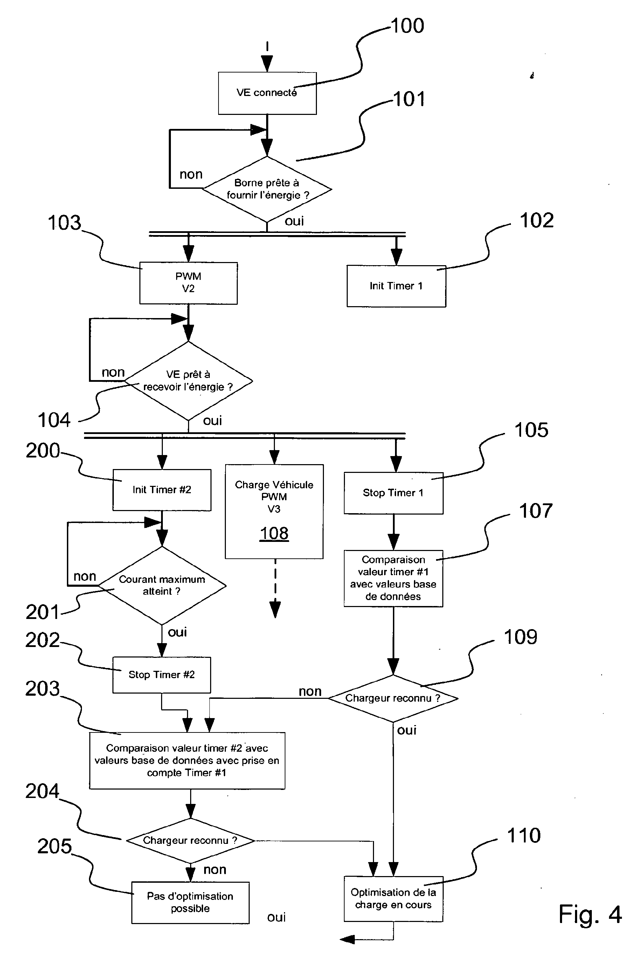

Selon un premier mode évolutif de réalisation de l'invention, tel que représenté sur la figure 4, le procédé de contrôle et d'optimisation permet d'augmenter la qualité d'identification du type de chargeur. En effet, si la comparaison 107 entre la valeur du premier temps de diagnostic T1 et les valeurs « étalon » ne permet pas de déterminer de manière certaine le type de chargeur électrique, alors le premier mode évolutif permet d'affiner les critères de discrimination du type de chargeur.

Le procédé consiste alors à initialiser 200 une seconde minuterie timer #2 de manière concomitante à la fourniture 108 de la tension dite « de charge » audit véhicule. L'étape suivante consiste à détecter 201 l'instant où un courant de charge consommé par le véhicule électrique 2 atteint une valeur maximale. Un second temps de diagnostic T2 écoulé pour que le courant de charge atteigne une valeur maximale est relevé 202.

La valeur du second temps de diagnostic T2 est ensuite comparer 203 avec des valeurs enregistrées dans une base de données.

Cette comparaison est faite en prenant en compte l'état comparatif lié au premier temps de diagnostic T1.

Cette dernière comparaison permet de déterminer 204 un type de chargeur du véhicule électrique en fonction desdits premier et second temps de diagnostic T1, T2.

Connaissant le type de chargeur, l'unité de traitement 12 de la borne de chargement 1 est apte à prendre 110 en compte les caractéristiques dudit chargeur identifié pour optimiser la gestion d'énergie localement.

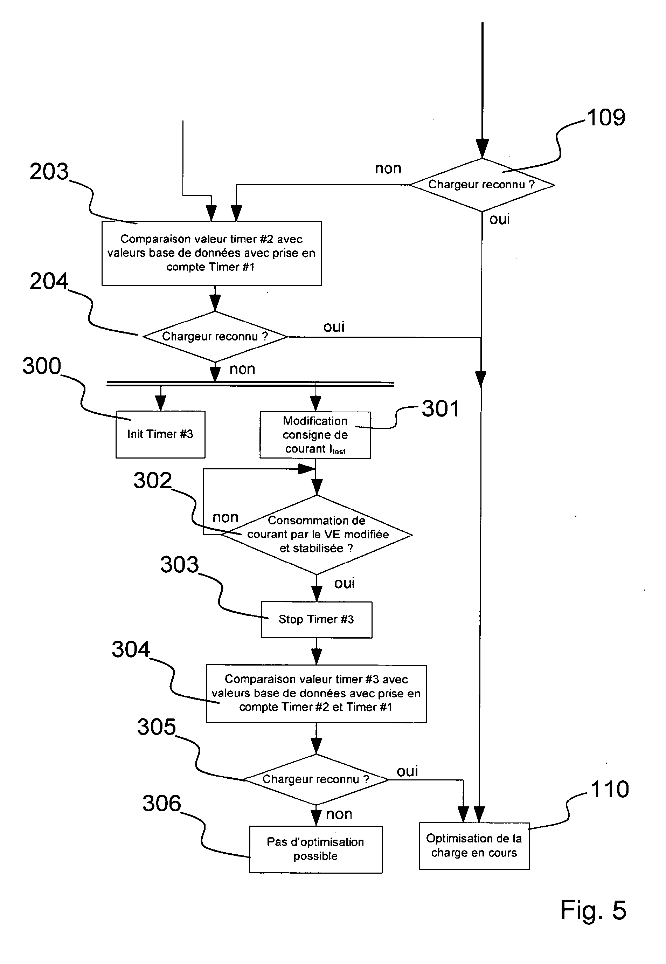

Selon un second mode évolutif de réalisation de l'invention, tel que représenté sur la figure 5, le procédé de contrôle et d'optimisation permet d'augmenter la qualité d'identification du type de chargeur. En effet, si le premier mode évolutif n'est pas suffisant pour déterminer de manière certaine le type de chargeur électrique, alors le second mode évolutif permet d'affiner encore les critères de discrimination du type de chargeur.

Le procédé consiste alors réaliser de manière concomitante une initialisation 300 une troisième minuterie timer #3 et la fixation 301 du courant de charge à une seconde valeur de charge maximum Iₘₐₓ₂. Le rapport cyclique de la modulation permet de fixer le courant de charge à la seconde valeur de charge maximum Iₘₐₓ₂. La tension « de sortie » est modulée entre une valeur positive égale à la troisième valeur de tension V3 et une valeur négative égale à l'opposé de la première valeur de tension -V1.

Le procédé vérifie 302 que le véhicule électrique 2 régule son courant de charge en fonction de la seconde valeur de charge maximum Iₘₐₓ₂. Comme représenté sur la figure 2, un troisième temps de diagnostique T3 est relevé 303 dès que le véhicule atteint un courant de charge maximum lié à la consigne Iₘₐₓ₂.

La valeur du troisième temps de diagnostique T3 est ensuite comparer 304 avec des valeurs enregistrées dans une base de données. Cette comparaison est faite en prenant à la fois en compte l'état comparatif lié au premier temps de diagnostic T1 et de l'état comparatif lié au second temps de diagnostique T2.

Cette dernière comparaison permet de déterminer 305 un type de chargeur du véhicule électrique en fonction desdits premier, second et troisième temps T1, T2, T3.

Connaissant le type de chargeur, l'unité de traitement 12 de la borne de chargement 1 est apte à prendre 110 en compte les caractéristiques dudit chargeur identifié pour optimiser la gestion d'énergie localement à la station de charge.

Lorsque le chargeur détecte que les batteries du véhicule sont complètement chargées, ou bien lorsque l'usager interrompt la charge, le chargeur ouvre le contact S2 (point C sur le figure 2). Cela a pour conséquence de déconnecter la résistance de charge R3 du fil pilote et donc une transition (point A sur le figure 2) du signal PWM de la troisième valeur de tension V3 à la seconde valeur de tension V2. Lorsque la borne de charge détecte la transition de la tension de fil pilote de la troisième valeur à la seconde valeur de tension (V3 à V2), elle ouvre le contacteur de puissance 15 (point D sur le figure 2).

Tant que le véhicule électrique reste connecté à la borne, le signal modulé de type PWM sur le fil pilote reste modulé au niveau de la seconde valeur de tension V2. Lorsque le véhicule électrique est déconnecté, cela provoque une transition de la tension du signal PWM de la seconde valeur de tension V2 à la première valeur de tension V1 (point B sur le figure 2). Dès que la première valeur de tension V1 est mesurée, la borne de chargement arrête la modulation du signal de tension.

## Revendications

1. Procédé de contrôle et d'optimisation de fonctionnement d'une borne de chargement d'un véhicule électrique, ladite borne comportant des moyens de connexion aptes à se connecter à un véhicule pour un chargement électrique et pour dialoguer au moyen d'un signal transmis sur un fil pilote, procédé consistant à :
- générer une tension « de sortie » égale à une première valeur de tension (V1) continue ;
- connecter (100) un véhicule électrique à la borne de chargement, la tension « de sortie » passant de la première valeur de tension (V1) continue à une seconde valeur de tension (V2) continue;
- vérifier (101) l'aptitude au chargement de ladite borne ;
- autoriser (103) la charge du véhicule électrique en modulant la tension « de sortie » entre une valeur positive égale à la seconde valeur de tension (V2) et une valeur négative égale à l'opposé de la première valeur de tension (-V1), la modulation de type PWM ayant un rapport cyclique fixé en fonction d'un courant de charge maximum (Iₘₐₓ) autorisé ;
- vérifier (104) l'aptitude du véhicule électrique à être rechargé en contrôlant une valeur positive de la tension « de sortie » modulée, ladite valeur positive de la tension « de sortie » passant de la seconde valeur de tension (V2) à une troisième valeur de tension (V3) lorsque ledit véhicule est apte ;
- Fournir (108) une tension dite « de charge » audit véhicule en modulant la tension « de sortie » entre une valeur positive égale à la troisième valeur de tension (V3) et une valeur négative égale à l'opposé de la première valeur de tension (-V1), le rapport cyclique de la modulation permettant de fixer le courant de charge maximum à une première valeur (Iₘₐₓ₁) ;
**caractérisé en ce que** le procédé consiste à :
- initialiser (102) une première minuterie (timer #1) de manière concomitante à l'autorisation de la charge du véhicule (103) ;
- relever (105) un premier temps de diagnostic (T1) écoulé entre :
- l'initialisation (102) de la première minuterie (timer #1), et
- le passage de la tension « de sortie » de la seconde valeur de tension (V2) à une troisième valeur de tension (V3) ;
- comparer (107) la valeur du premier temps de diagnostic (T1) avec des valeurs « étalon » enregistrées dans une base de données ;
- déterminer (109) un type de chargeur du véhicule électrique en fonction d'un état comparatif entre ledit premier temps de diagnostic (T1) et les valeurs « étalon » ;
- prendre (110) en compte les caractéristiques du chargeur du véhicule électrique identifié pour optimiser la gestion d'énergie localement.

2. Procédé de contrôle et d'optimisation selon la revendication 1, **caractérisé en ce que** la première valeur de tension (V1) continue est supérieure à la seconde valeur de tension (V2) continue.

3. Procédé de contrôle et d'optimisation selon les revendications 1 ou 2, **caractérisé en ce que** la seconde valeur de tension (V2) est supérieure à la troisième valeur de tension (V3).

4. Procédé de contrôle et d'optimisation selon l'une des revendications 1 à 3, **caractérisé en ce qu'**il consiste à :
- initialiser (200) une seconde minuterie (timer #2) de manière concomitante à la fourniture (108) de la tension dite « de charge » audit véhicule ;
- détecter (201) l'instant où un courant de charge consommé par le véhicule atteint une valeur maximale ;
- relever (202) un second temps de diagnostic (T2) écoulé pour que le courant de charge atteigne une valeur maximale ;
- comparer (203) la valeur du second temps de diagnostic (T2) avec des valeurs enregistrées dans une base de données en prenant en compte de l'état comparatif relatif à la valeur du premier temps de diagnostic (T1) ;
- déterminer (204) un type de chargeur du véhicule électrique en fonction desdits premier et second temps de diagnostic (T1, T2)
- prendre (110) en compte les caractéristiques du chargeur du véhicule électrique identifié pour optimiser la gestion d'énergie localement.

5. Procédé de contrôle et d'optimisation selon la revendication 4, **caractérisé en ce qu'**il consiste à :
- de manière concomitante :
- initialiser (300) une troisième minuterie (timer #3) ;
- fixer (301) le courant de charge maximum à une seconde valeur de charge (Iₘₐₓ₂), la tension « de sortie » étant modulée entre une valeur positive égale à la troisième valeur de tension (V3) et une valeur négative égale à l'opposé de la première valeur de tension (-V1) ;
- Vérifier (302) que le véhicule régule son courant en fonction de la seconde valeur maximum de charge (Iₘₐₓ₂) ;
- relever (303) un troisième temps de diagnostique (T3) au moment où véhicule électrique (2) régule son courant de charge à la seconde valeur maximum de charge (Iₘₐₓ₂) ;
- comparer (304) la valeur du troisième temps de diagnostique (T3) avec des valeurs enregistrées dans une base de données en prenant en compte :
- l'état comparatif la valeur du premier temps de diagnostique (T1) ;
- l'état comparatif la valeur du second temps de diagnostique (T2) ;
- déterminer (305) un type de chargeur du véhicule électrique en fonction desdits premier, second et troisième temps (T1, T2, T3) ;
- prendre (110) en compte les caractéristiques du chargeur du véhicule électrique identifié pour optimiser la gestion d'énergie localement.

6. Procédé de contrôle et d'optimisation selon l'une des revendications précédentes, **caractérisé en ce que** l'étape de prise en compte (110) consiste à adapter une valeur de consigne de courant maximum de charge (Iₘₐₓ) en fonction du type de chargeur connecté.

7. Procédé de contrôle et d'optimisation selon la revendication 6, **caractérisé en ce que** l'étape de prise en compte (110) consiste à adapter une valeur de consigne du courant maximum de charge (Iₘₐₓ) en fonction d'un courant maximum consommable par le chargeur connecté identifié.

8. Procédé de contrôle et d'optimisation selon les revendications 6 et 7, **caractérisé en ce que** l'étape de prise en compte (110) consiste à adapter une puissance électrique maximum délivrée par ladite borne en fonction d'un fonctionnement globale d'une station de charge comportant plusieurs bornes de chargement.

9. Procédé de contrôle et d'optimisation selon la revendication 8, **caractérisé en ce qu'**il consiste à :
- mesurer la différence de courant électrique entre le courant maximum consommable par le chargeur connecté identifié et le courant maximum de charge Iₘₐₓ autorisé par la borne ;
- mettre à disposition la différence de courant électrique mesurée au profit d'une autre borne de chargement de la station de charge.

10. Borne de chargement électrique pour la mise en oeuvre du procédé de contrôle et d'optimisation selon les revendications précédentes, ladite borne comportant :
- des moyens de connexion (10) aptes à se connecter à un véhicule (2) pour un chargement électrique et pour dialoguer au moyen d'un signal transmis sur un fil pilote ;
- des moyens (13) pour générer :
- une tension « de sortie » continue ou modulée ;
- une tension dite « de charge » audit véhicule en modulant la tension « de sortie » entre une valeur positive et une valeur négative, le rapport cyclique de la modulation permettant de fixer le courant de charge maximum à une première valeur (Iₘₐₓ₁) ;
- des moyens de traitement (12) pour :
- pour vérifier l'aptitude au chargement de ladite borne ;
- pour vérifier l'aptitude du véhicule électrique à être rechargé en contrôlant une valeur positive de la tension « de sortie » modulée ;
- des moyens pour autoriser la charge du véhicule électrique ;
borne **caractérisé en ce que** les moyens de traitement (12) comportent des moyens pour :
- initialiser une première minuterie (timer #1) de manière concomitante à l'autorisation de la charge du véhicule ;
- relever un premier temps de diagnostic (T1) écoulé entre :
- l'initialisation de la première minuterie (timer #1), et
- le passage de la tension « de sortie » d'une seconde valeur de tension (V2) à une troisième valeur de tension (V3) ;
- comparer la valeur du premier temps de diagnostic (T1) avec des valeurs « étalon » enregistrées dans une base de données ;
- déterminer un type de chargeur du véhicule électrique en fonction d'un état comparatif entre ledit premier temps de diagnostic (T1) et les valeurs « étalon » ;
- prendre en compte les caractéristiques du chargeur du véhicule électrique identifié pour optimiser la gestion d'énergie localement.

## Patentansprüche

1. Verfahren zur Überwachung und Optimierung der Betriebsweise eines Gebührenterminals eines Elektrofahrzeugs, wobei das Terminal Anschlussmittel umfasst, die geeignet sind, an ein Fahrzeug für das elektrische Aufladen und zum Dialogieren mittels eines Signals, das auf einem Pilotleiter übertragen wird, angeschlossen zu werden, wobei das Verfahren aus Folgendem besteht:
- Erzeugen einer "Ausgangs"-Spannung gleich einem ersten Gleichspannungswert (V1),
- Anschließen (100) eines Elektrofahrzeugs an das Gebührenterminal, wobei die "Ausgangs"-Spannung von dem ersten Gleichspannungswert (V1) auf einen zweiten Gleichspannungswert (V2) übergeht,
- Prüfen (101) der Eignung zum Laden des Terminals,
- Genehmigen (103) des Ladens des Elektrofahrzeugs, indem die "Ausgangs"-Spannung zwischen einem ersten positiven Wert gleich dem zweiten Gleichspannungswert (V2) und einem negativen Wert, der dem ersten Spannungswert entgegengesetzt ist (-V1), wobei die Modulation des Typs PWM ein zyklisches Verhältnis hat, das in Abhängigkeit von einem zugelassenen maximalen Ladestromwert (Iₘₐₓ) festgelegt ist,
- Prüfen (104) der Eignung des Elektrofahrzeugs zum Aufladen unter Steuern eines modulierten positiven "Ausgangs"-Spannungswerts, wobei der positive Wert der "Ausgangs"-Spannung von dem zweiten Spannungswert (V2) auf einen dritten Spannungswert (V3) übergeht, wenn das Fahrzeug geeignet ist,
- Bereitstellen (108) einer sogenannten "Lade"-Spannung zu dem Fahrzeug, indem die "Ausgangs"-Spannung zwischen einem positiven Wert, der gleich dem dritten Spannungswert (V3) ist, und einem negativen Wert, der gleich dem Entgegengesetzten des ersten Spannungswerts (-V1) ist, moduliert wird, wobei es das zyklische Verhältnis der Modulation erlaubt, den maximalen Ladestrom auf einen ersten Wert (Iₘₐₓ₁) festzulegen,
**dadurch gekennzeichnet, dass** das Verfahren aus Folgendem besteht:
- Initialisieren (102) eines ersten Zählwerks (timer #1) gleichzeitig mit der Aufladegenehmigung des Fahrzeugs (103),
- Erheben (105) einer ersten Diagnosezeit (T1), die abgelaufen ist zwischen:
- dem Initialisieren (102) des ersten Zählwerks (timer #1) und
- dem Übergang der "Ausgangs"-Spannung von dem zweiten Spannungswert (V2) auf einen dritten Spannungswert (V3),
- Vergleichen (107) des Werts der ersten Diagnosezeit (T1) mit "Eich"-Werten, die in einer Datenbank aufgezeichnet sind,
- Bestimmen (109) eines Aufladertyps des Elektrofahrzeugs in Abhängigkeit von einem Vergleichszustand zwischen der ersten Diagnosezeit (T1) und den "Eich"-Werten,
- Berücksichtigen (110) der Merkmale des identifizierten Aufladers des Elektrofahrzeugs, zur lokalen Optimierung des Energiemanagements.

2. Verfahren zur Überwachung und Optimierung nach Anspruch 1, **dadurch gekennzeichnet, dass** der erste Gleichspannungswert (V1) größer ist als der zweite Gleichspannungswert (V2).

3. Verfahren zur Überwachung und Optimierung nach den Ansprüchen 1 oder 2, **dadurch gekennzeichnet, dass** der zweite Spannungswert (V2) größer ist als der dritte Spannungswert (V3).

4. Verfahren zur Überwachung und Optimierung nach einem der Ansprüche 1 bis 3, **dadurch gekennzeichnet, dass** es aus Folgendem besteht:
- Initialisieren (200) eines zweiten Zählwerks (timer #2) gleichzeitig mit der Lieferung (108) der sogenannten "Lade"-Spannung zu dem Fahrzeug,
- Erfassen (201) des Augenblicks, in dem der Ladestrom, der von dem Fahrzeug verbraucht wird, einen maximalen Wert erreicht,
- Erheben (202) einer zweiten Diagnosezeit (T2), die verstrichen ist, damit der Ladestromwert einen maximalen Wert erreicht,
- Vergleichen (203) des Werts der zweiten Diagnosezeit (T2) mit Werten, die in einer Datenbank aufgezeichnet sind, unter Berücksichtigung des Vergleichszustands in Bezug auf den Wert der ersten Diagnosezeit (T1),
- Bestimmen (204) eines Aufladertyps des Elektrofahrzeugs in Abhängigkeit von der ersten und zweiten Diagnosezeit (T1, T2),
- Berücksichtigung (110) der Merkmale des identifizierten Aufladers des Elektrofahrzeugs, um lokal das Energiemanagement zu optimieren.

5. Verfahren zur Überwachung und Optimierung nach Anspruch 4, **dadurch gekennzeichnet, dass** es aus Folgendem besteht:
- gleichzeitig:
- Initialisieren (300) eines dritten Zählwerks (timer #3),
- Festlegen (301) des maximalen Ladestroms auf einen zweiten Ladewert (Iₘₐₓ₂), wobei die "Ausgangs"-Spannung zwischen einem positiven Wert, der gleich dem dritten Spannungswert (V3) ist, und einem negativen Wert, der gleich dem Entgegengesetzten des ersten Spannungswerts (-V1) ist, moduliert wird,
- Prüfen (302), dass das Fahrzeug seinen Strom in Abhängigkeit von dem zweiten maximalen Ladewert (Iₘₐₓ₂) reguliert,
- Prüfen (303) einer dritten Diagnosezeit (T3) in dem Augenblick, in dem das Elektrofahrzeug (2) seinen Ladestrom auf den zweiten maximalen Ladewert (Iₘₐₓ₂) reguliert,
- Vergleichen (304) des Werts der dritten Diagnosezeit (T3) mit Werten, die in einer Datenbank aufgezeichnet sind, unter Berücksichtigung:
- des Vergleichszustands des Werts der ersten Diagnosezeit (T1),
- des Vergleichszustands des Werts der zweiten Diagnosezeit (T2),
- Bestimmen (305) eines Aufladertyps des Elektrofahrzeugs in Abhängigkeit von der ersten, zweiten und dritten Zeit (T1, T2, T3),
- Berücksichtigen (110) der Merkmale des identifizierten Aufladers des Elektrofahrzeugs zur lokalen Optimierung des Energiemanagements.

6. Verfahren zur Überwachung und Optimierung nach einem der vorhergehenden Ansprüche, **dadurch gekennzeichnet, dass** der Berücksichtigungsschritt (110) darin besteht, einen maximalen Ladestromsollwert (Iₘₐₓ) in Abhängigkeit von dem angeschlossenen Aufladertyp anzupassen.

7. Verfahren zur Überwachung und Optimierung nach Anspruch 6, **dadurch gekennzeichnet, dass** der Berücksichtigungsschritt (110) darin besteht, einen maximalen Ladestromsollwert (Iₘₐₓ) in Abhängigkeit von einem maximalen von dem identifizierten angeschlossenen Auflader verbrauchbaren Strom anzupassen.

8. Verfahren zur Überwachung und Optimierung nach den Ansprüchen 6 und 7, **dadurch gekennzeichnet, dass** der Berücksichtigungsschritt (110) darin besteht, eine maximale elektrische Leistung, die von dem Terminal geliefert wird, in Abhängigkeit von einer globalen Betriebsweise einer Aufladestation, die mehrere Gebührenterminals umfasst, anzupassen.

9. Verfahren zur Überwachung und Optimierung nach Anspruch 8, **dadurch gekennzeichnet, dass** es aus Folgendem besteht:
- Messen des Unterschieds elektrischen Stroms zwischen dem maximalen von dem identifizierten angeschlossenen Auflader verbrauchbaren Strom und dem von dem Terminal zugelassenen maximalen Aufladestrom Iₘₐₓ,
- Bereitstellen des Unterschieds des gemessenen elektrischen Stroms zugunsten eines anderen Gebührenterminals der Aufladestation.

10. Elektrisches Gebührenterminal für das Umsetzen des Verfahrens zur Überwachung und Optimierung nach einem der vorhergehenden Ansprüche, wobei das Terminal Folgendes umfasst:
- Anschlussmittel (10), die geeignet sind, an ein Fahrzeug (2) für ein elektrisches Aufladen und zum Dialogieren mittels eines auf einem Pilotleiter übertragenen Signals angeschlossen zu werden,
- Mittel (13), um Folgendes zu erzeugen:
- eine "Ausgangs"-Gleich- oder modulierte Spannung,
- eine sogenannte "Lade"-Spannung zu dem Fahrzeug, indem die "Ausgangs"-Spannung zwischen einem positiven Wert und einem negativen Wert moduliert wird, wobei es das zyklische Verhältnis der Modulation erlaubt, den maximalen Ladestrom auf einen ersten Wert (Iₘₐₓ₁) festzulegen,
- Verarbeitungsmittel (12), um:
- die Eignung zum Laden des Terminals zu prüfen,
- die Eignung des Elektrofahrzeugs zum Aufladen zu prüfen, indem ein positiver modulierter "Ausgangs"-Spannungswert überwacht wird,
- Mittel zum Genehmigen des Aufladens des Elektrofahrzeugs,
Terminal **dadurch gekennzeichnet, dass** die Verarbeitungsmittel (12) Mittel umfassen, um:
- ein erstes Zählwerk (timer #1) gleichzeitig mit der Genehmigung des Aufladens des Fahrzeugs zu initialisieren,
- eine erste Diagnosezeit (T1) zu erheben, die verstrichen ist zwischen:
- der Initialisierung des ersten Zählwerks (timer #1) und
- dem Übergang der "Ausgangs"-Spannung von einem zweiten Spannungswert (V2) auf einen dritten Spannungswert (V3),
- Vergleichen des Werts der ersten Diagnosezeit (T1) mit "Eich"-Werten, die in einer Datenbank aufgezeichnet sind,
- Bestimmen eines Aufladertyps des Elektrofahrzeugs in Abhängigkeit von einem Vergleichszustand zwischen der ersten Diagnosezeit (T1) und den "Eich"-Werten,
- Berücksichtigen der Merkmale des identifizierten Aufladers des Elektrofahrzeugs, um lokal das Energiemanagement zu optimieren.

## Claims

1. Method for monitoring and optimizing the operation of a terminal for charging an electric vehicle, said terminal having connection means that are capable of being connected to a vehicle for an electric charging operation and for conversing by means of a signal transmitted on a control wire, said method consisting in:
- generating an "output" voltage equal to a first DC voltage value (V1);
- connecting (100) an electric vehicle to the charging terminal, the "output" voltage changing from the first DC voltage value (V1) to a second DC voltage value (V2);
- checking (101) the aptitude of said terminal for charging;
- authorizing (103) charging of the electric vehicle by modulating the "output" voltage between a positive value equal to the second voltage value (V2) and a negative value equal to the opposite of the first voltage value (-V1), the modulation of PWM type having a duty cycle that is fixed according to an authorized maximum charging current (Iₘₐₓ);
- checking (104) the aptitude of the electric vehicle to be recharged by monitoring a positive value of the modulated "output" voltage, said positive "output" voltage changing from the second voltage value (V2) to a third voltage value (V3) when said vehicle is apt;
- supplying (108) what is known as a "charging" voltage to said vehicle by modulating the "output" voltage between a positive value equal to the third voltage value (V3) and a negative value equal to the opposite of the first voltage value (-V1), the duty cycle of the modulation allowing the maximum charging current to be fixed at a first value (Iₘₐₓ₁);
**characterized in that** the method consists in:
- initializing (102) a first timer (timer#1) concomitantly with the authorization of charging of the vehicle (103);
- noting (105) a first diagnostic time (T1) that has elapsed between:
- the initialization (102) of the first timer (timer#1) and
- the changing of the "output" voltage from the second voltage value (V2) to a third voltage value (V3);
- comparing (107) the value of the first diagnostic time (T1) with "standard" values recorded in a database;
- determining (109) a type of charger for the electric vehicle according to a comparative state between said first diagnostic time (T1) and the "standard" values;
- taking (110) into account the characteristics of the charger identified for the electric vehicle in order to optimize energy management locally.

2. Monitoring and optimization method according to Claim 1, **characterized in that** the first DC voltage value (V1) is higher than the second DC voltage value (V2).

3. Monitoring and optimization method according to Claim 1 or 2,
**characterized in that** the second voltage value (V2) is higher than the third voltage value (V3).

4. Monitoring and optimization method according to one of Claims 1 to 3, **characterized in that** it consists in:
- initializing (200) a second timer (timer#2) concomitantly with the supply (108) of the "charging" voltage to said vehicle;
- detecting (201) the instant at which a charging current consumed by the vehicle reaches a maximum value;
- noting (202) a second diagnostic time (T2) that has elapsed for the charging current to reach a maximum value;
- comparing (203) the value of the second diagnostic time (T2) with values recorded in a database by taking into account the comparative state relating to the value of the first diagnostic time (T1);
- determining (204) a type of charger for the electric vehicle according to said first and second diagnostic times (T1, T2);
- taking (110) into account the characteristics of the charger identified for the electric vehicle in order to optimize energy management locally.

5. Monitoring and optimization method according to Claim 4, **characterized in that** it consists in:
- concomitantly:
- initializing (300) a third timer (timer#3);
- fixing (301) the maximum charging current at a second charging value (Iₘₐₓ₂), the "output" voltage being modulated between a positive value equal to the third voltage value (V3) and a negative value equal to the opposite of the first voltage value (-V1);
- checking (302) that the vehicle regulates its current according to the second maximum charging value (Iₘₐₓ₂);
- noting (303) a third diagnostic time (T3) at the moment at which the electric vehicle (2) regulates its charging current to the second maximum charging value (Iₘₐₓ₂);
- comparing (304) the value of the third diagnostic time (T3) with values recorded in a database taking into account:
- the comparative state for the value of the first diagnostic time (T1);
- the comparative state for the value of the second diagnostic time (T2);
- determining (305) a type of charger for the electric vehicle according to said first, second and third times (T1, T2, T3);
- taking (110) into account the characteristics of the charger identified for the electric vehicle in order to optimize energy management locally.

6. Monitoring and optimization method according to one of the preceding claims, **characterized in that** the step of taking into account (110) consists in adapting a setpoint value for maximum charging current (Iₘₐₓ) according to the type of charger connected.

7. Monitoring and optimization method according to Claim 6, **characterized in that** the step of taking into account (110) consists in adapting a setpoint value for the maximum charging current (Iₘₐₓ) according to a maximum current that can be consumed by the connected charger identified.

8. Monitoring and optimization method according to Claims 6 and 7, **characterized in that** the step of taking into account (110) consists in adapting a maximum electric power delivered by said terminal according to overall operation of a charging station having a plurality of charging terminals.

9. Monitoring and optimization method according to Claim 8, **characterized in that** it consists in:
- measuring the difference in electric current between the maximum current that can be consumed by the connected charger identified and the maximum charging current (Iₘₐₓ) authorized by the terminal;
- making the measured difference in electric current available to another charging terminal of the charging station.

10. Electric charging terminal for implementing the monitoring and optimization method according to the preceding claims, said terminal having:
- connection means (10) that are capable of being connected to a vehicle (2) for an electric charging operation and for conversing by means of a signal transmitted on a control wire;
- means (13) for generating:
- a DC or modulated "output" voltage;
- what is known as a "charging" voltage for said vehicle by modulating the "output" voltage between a positive value and a negative value, the duty cycle of the modulation allowing the maximum charging current to be fixed at a first value (Iₘₐₓ₁);
- processing means (12) for:
- checking the aptitude of said terminal for charging;
- checking the aptitude of the electric vehicle to be recharged by monitoring a positive value of the modulated "output" voltage;
- means for authorizing charging of the electric vehicle;
said terminal **characterized in that** the processing means (12) have means for:
- initializing a first timer (timer#1) concomitantly with the authorization of charging of the vehicle;
- noting a first diagnostic time (T1) that has elapsed between:
- the initialization of the first timer (timer#1) and
- the changing of the "output" voltage from a second voltage value (V2) to a third voltage value (V3);
- comparing the value of the first diagnostic time (T1) with "standard" values recorded in a database;
- determining a type of charger for the electric vehicle according to a comparative state between said first diagnostic time (T1) and the "standard" values;
- taking into account the characteristics of the charger identified for the electric vehicle in order to optimize energy management locally.
